# EUROPEAN PATENT APPLICATION

(11) **EP 4 742 645 A1**
(43) Date of publication of application: **13.05.2026**
(21) Application number: 25213662.7
(22) Date of filing: 05.11.2025
(51) Int. Cl.: H04N 1/00

(54) **IMAGE FORMING APPARATUS**

(30) Priority: 12.11.2024 JP 2024197667
(71) Applicant: KYOCERA Document Solutions Inc., Osaka-shi, Osaka 540-8585 (JP)
(72) Inventor: YABUUCHI, Yasuyuki, Osaka-shi, Osaka, 540-8585 (JP)
(74) Representative: Viering, Jentschura & Partner mbB Patent- und Rechtsanwälte

(57) **Abstract**

An image forming apparatus (10) includes a reader (15) and a setting section (16). The reader (15) reads a sheet with a printed barcode as image data. The setting section (16) sets a setting related to storing of the image data to first job setting information that is information related to storing of the image data, the first job setting information being given to the barcode.

## Description

### Incorporation by Reference

This application claims the benefit of Japanese Priority Patent Application JP 2024-197667 filed November 12, 2024, under 35 U.S.C. 119, the entire contents of which are incorporated herein by reference.

### Field

The present disclosure relates to an image forming apparatus that is applicable to, for example, reading of a sheet such as a document.

### Background

Conventionally, image forming apparatuses such as inkjet printers have been equipped with a sensor that reads a barcode in which various settings such as a sheet type are hidden. In this case, when a plurality of document bundles to be read are read in one bundle and if the document bundles have a plurality of barcodes, it has not been possible to change job settings and the like.

For example, in Japanese Patent Application Laid-open No. 2006-315340, a barcode printed on a sheet is read by a sensor to set a predetermined setting value in a printer on the basis of barcode data. This facilitates an out-of-factory shipping process. In addition, in Japanese Patent Application Laid-open No. 2006-56197, setting values are set on the basis of read barcode data. In such a manner, commands and setting values of various setting items represented by barcodes are sequentially read, thus making it easy to set various setting values.

### Summary

According to an embodiment of the present disclosure, there is provided an image forming apparatus including a reader and a setting section.

The reader reads a sheet with a printed barcode as image data.

The setting section sets a setting related to storing of the image data to first job setting information that is information related to storing of the image data, the first job setting information being given to the barcode.

These and other objects, features and advantages of the present disclosure will become more apparent in light of the following detailed description of best mode embodiments thereof, as illustrated in the accompanying drawings.

### Brief Description of Figures

Fig. 1 is a block diagram showing a configuration example of an image forming apparatus; and
Fig. 2 is a flowchart showing an example of a method of setting job setting information.

### Detailed Description

Hereinafter, an embodiment of the present disclosure will be described with reference to the drawings.

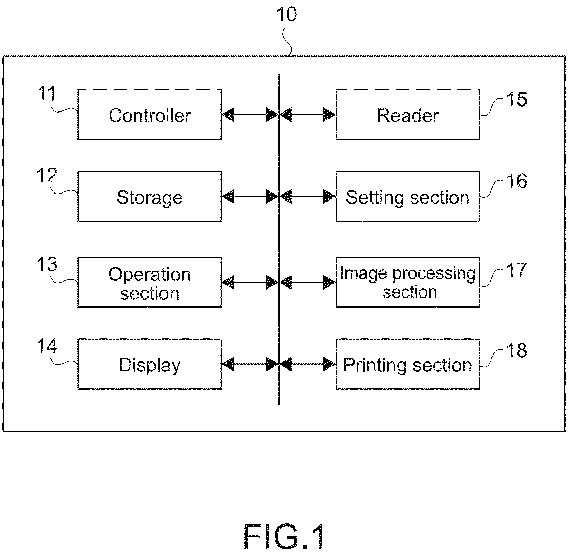

Fig. 1 is a block diagram showing a configuration example of an image forming apparatus 10 according to the present disclosure.

As shown in Fig. 1, the image forming apparatus 10 includes a controller 11, a storage 12, an operation section 13, a display 14, a reader 15, a setting section 16, an image processing section 17, and a printing section 18.

In this embodiment, the image forming apparatus 10 is a multifunction peripheral or a printer and is an apparatus capable of installing a platform application for image forming apparatuses (HyPas application by KYOCERA Document Solutions Inc.) thereon.

The controller 11 performs the overall control of the image forming apparatus 10. For example, a central processing unit (CPU), a micro processing unit (MPU), an application specific integrated circuit (ASIC), or the like may be used as the controller 11. In addition, the controller 11 reads a control program stored in the storage 12 to be described later, and executes the control program to perform the operation of each block.

The storage 12 stores the control program for controlling the image forming apparatus 10 and settings of various types of data, such as font data related to printing. For example, a read only memory (ROM), a hard disk drive (HDD), a random access memory (RAM), or the like may be used as the storage 12.

The operation section 13 is capable of giving instructions for various operations of the image forming apparatus 10 by a user performing predetermined operations. For example, in the operation section 13, a button, a touch panel, or the like may be used to input the instructions for performing various functions of the image forming apparatus, such as scanner, copying, and fax transmission.

The display 14 displays various types of information related to the image forming apparatus 10. For example, the display 14 may display a preview of a scanned document or the like. In addition, for example, a liquid crystal display, an organic EL display, or the like may be used as the display 14.

In addition to the above, the display 14 may also display an operation screen for operating the image forming apparatus 10. For example, the operation screen may include a home screen for selecting one of a plurality of functions that can be performed by the image forming apparatus 10, and a setting screen for configuring settings for the setting items of the functions.

The reader 15 reads a barcode printed on a sheet. For example, the reader 15 may include a light-emitting section that emits predetermined light, and a light-receiving section that receives reflected light, of the light emitted from the light-emitting section, which is reflected from a predetermined print sheet. For example, the reader 15 reads the presence or absence of a barcode or job setting information hidden in the barcode on the basis of the amount of light received from the light-receiving section.

In other words, the reader 15 can also be referred to as a determination section that determines whether or not a barcode is printed on a document and determines whether or not the barcode is job setting information. In addition, the reader 15 may use a media sensor, a line sensor, or a two-dimensional barcode sensor.

Further, the reader 15 reads a document to generate image data. Note that the generated image data may be stored in the storage 12 or saved by being uploaded to the cloud.

The setting section 16 sets job setting information in accordance with job setting information of a barcode read (scanned) by the reader 15. For example, it is assumed that the reader 15 scans an N-th document on which a barcode with hidden job setting information N is printed. In this case, if a barcode is not printed on an (N+1)-th document, the setting section 16 scans the (N+1)-th document with the job setting information N. Similarly, if a barcode with hidden job setting information (N+2) is printed on an (N+2)-th document and if no barcode is printed on an (N+3)-th document, the setting section 16 outputs the (N+3)-th document with the job setting information (N+2).

In other words, if a document has no barcode or if a document has no barcode with job setting information printed thereon, the setting section 16 takes over the job setting information previously read (first job setting information) and scans that document. In addition, if there is new job setting information (second job setting information), the setting section 16 performs scanning with that job setting information. Repeating this operation makes it possible to scan each document with suitable job setting information.

Here, the job setting information includes settings related to various jobs such as scanning, storing, and transfer. For example, scanning includes reading methods such as an automatic document feeder (ADF) and double-side reading, a document size of sheets such as automatic and A3, and resolution (e.g., 300 dpi). In addition, for example, storing includes a file name including a date and a serial number, a storing format such as PDF, a destination to save data, such as a predetermined folder and cloud. Further, for example, transfer includes a transfer destination to set a file to which the read data is to be transferred. In addition to the above, various settings such as color selection and transmission resolution may be included. Note that the job setting information is not limited and may include various settings such as an index. For example, in response to a request from the HyPas application, a multifunction peripheral (MFP) may perform image processing. In addition, image processing settings performed by the MFP may be achieved by decoding information embedded into barcodes.

Further, the barcode includes barcode hiding job information that is information in which job information of KYOCERA Document Solutions Inc. is described in a fixed format and changed into a barcode. In this embodiment, the barcode hiding job information is used as a switching factor (flag) for job setting information. Here, the barcode hiding job information refers to information in which job setting information is barcoded, that is, job setting information hidden in a barcode.

The image processing section 17 performs image processing on the image data scanned by the reader 15. For example, the image processing may include scaling, density adjustment, tone adjustment, image improvement, etc.

The printing section 18 performs operations related to printing by the image forming apparatus. For example, the printing section 18 conveys a recording sheet stored in a sheet feeding cassette by means of conveyance rollers and forms scanned image data on the recording sheet by controlling an ink head and the like.

Note that the configuration of the image forming apparatus 10 is not limited. For example, the image forming apparatus 10 may be an apparatus that performs image processing including at least scanning, or may be a printer, a copying machine, a scanning machine, a facsimile machine, or an MFP having those functions. In addition, for example, the image forming apparatus 10 may include a communication section for uploading image data to the cloud, and the like.

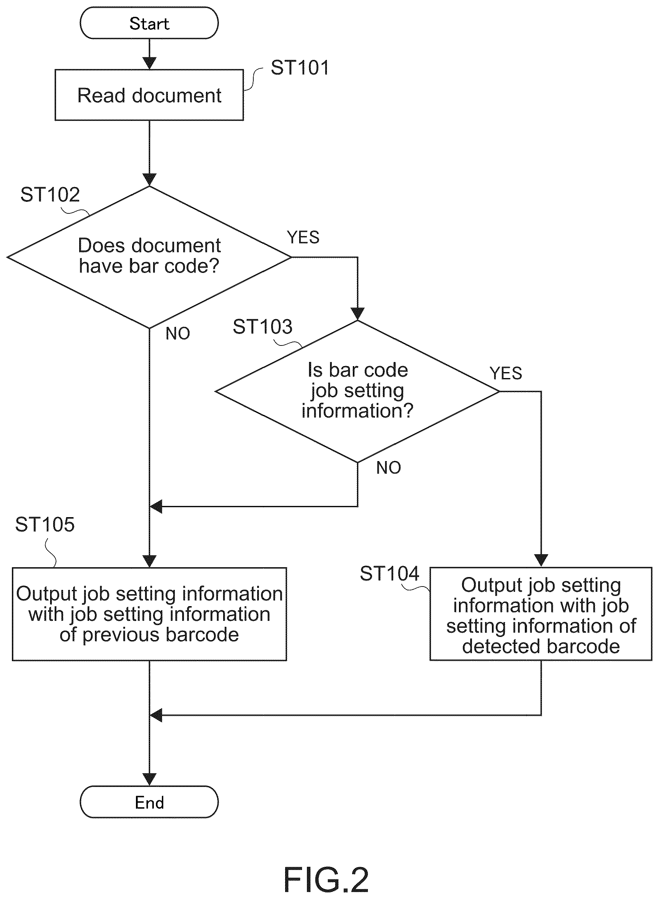

Fig. 2 is a flowchart showing an example of a method of setting the job setting information.

As shown in Fig. 2, a document is read by the reader 15 (Step 101). The reader 15 determines whether or not the document has a barcode when the reading is performed (Step 102).

If the document has a barcode (YES in Step 102), the reader 15 determines whether or not the barcode is job setting information (Step 103).

If the barcode is the job setting information (YES in Step 103), the setting section 16 outputs job setting information for scanning the document with the job setting information of the barcode detected in Step 103 (Step 104).

Alternatively, if the document has no barcode (NO in Step 102) or if the barcode is not the job setting information (NO in Step 103), the setting section 16 outputs job setting information for scanning the document with the job setting information of the previous barcode (Step 105).

Note that if there is no job setting information of the previous barcode (e.g., when a first document is read), job setting information is output with the job setting information determined in advance in the device. Further, the type of barcode printed on a document is not limited and may be any form (supported barcode) that fits a predetermined format when the barcode is decoded.

As described above, the image forming apparatus 10 according to this embodiment includes a reader that reads a sheet with a printed barcode as image data, and a setting section that sets a setting related to storing of the image data to first job setting information that is information related to storing of the image data, the first job setting information being given to the barcode. This enables time saving by reducing complicated operations by the user.

Conventionally, it has been possible to change a job setting by reading a barcode printed on a sheet, but if there is a bundle of documents including a plurality of documents with barcodes printed thereon, it has been impossible to change the job setting. In this case, the user needs to switch the job setting each time a barcode of a new job setting is provided, which is very complicated and time-consuming.

In the present technology, a document with job setting information hidden in a barcode is scanned, and thereafter the subsequent documents are scanned with an image processing setting value obtained after the job setting information hidden in the barcode is decoded and set in the system. When a document with a barcode is scanned again, the barcode is decoded to obtain other job setting information, and a job is performed with a new image processing setting value from the next document. Thus, even in a bundle of a plurality of documents, each time a barcode including a job setting is read, that job setting is used in place of the previous one, so that the operations performed by the user while switching the job settings can be performed in a single operation. This can contribute to time saving by reducing the complicated operations for the user.

It should be understood by those skilled in the art that various modifications, combinations, subcombinations and alterations may occur depending on design requirements and other factors insofar as they are within the scope of the appended claims or the equivalents thereof.

## Claims

1. An image forming apparatus (10), comprising:
a reader (15) that reads a sheet with a printed barcode as image data; and
a setting section (16) that sets a setting related to storing of the image data to first job setting information that is information related to storing of the image data, the first job setting information being given to the barcode.

2. The image forming apparatus (10) according to claim 1, wherein
the setting section (16) changes, when the reader (15) reads a sheet with a printed barcode including second job setting information different from the first job setting information, the setting related to storing of the image data from the first job setting information to the second job setting information.

3. The image forming apparatus (10) according to claim 1 or 2, wherein
the setting section (16) maintains, when the reader (15) reads a barcode without the first job setting information, the setting related to storing of the image data as the first job setting information.
